# EUROPEAN PATENT APPLICATION

(11) **EP 4 787 867 A1**
(43) Date of publication of application: **05.08.2026**
(21) Application number: 25305124.7
(22) Date of filing: 29.01.2025
(51) Int. Cl.: H04N 21/4402, H04N 21/4784, H04N 21/442

(54) **ENERGY SAVINGS BASED ON IMAGE PROCESSING**

(71) Applicant: InterDigital CE Patent Holdings, SAS, 75017 Paris (FR)
(72) Inventor: BLONDE, Laurent, 35235 THORIGNE-FOUILLARD (FR); DEMARTY, Claire-Helene, 35520 MONTREUIL LE GAST (FR); REINHARD, Erik, 35630 HEDE-BAZOUGES (FR); LE MEUR, Olivier, 35160 TALENSAC (FR); REDMANN, William, GLENDALE, 91205 (US); AUMONT, Franck, 35770 VERN SUR SEICHE (FR)
(74) Representative: Vossius & Partner Patentanwälte Rechtsanwälte mbB

(57) **Abstract**

An energy saving device may be configured to reduce carbon emissions of a user. The device may include a processor. The device may obtain media content. The device may estimate a first energy consumption value based on the media content. The device may receive a user input indicating a request to adjust the first energy consumption value or adjust a quality level associated with the media content. The device may, based on the user input: apply a video processing algorithm to the media content to obtain a modified media content, estimate a second energy consumption value based on the modified media content, and/or compare the first and the second energy consumption values to generate an estimated energy savings. The device may accumulate and/or store the estimated energy savings in an energy savings account.

## Description

### BACKGROUND

The present application is related to reducing individual and/or global carbon footprint(s) by lowering energy the consumption of electronic devices or systems, which may or may not include a display unit(s). Examples of such electronic devices or systems may include, for example, consumer electronics (e.g., TVs, monitors), mobile devices, and personal devices.

### BRIEF SUMMARY

Systems, methods, and instrumentalities are disclosed to save energy from image processing. An energy saving device may be configured to reduce greenhouse gas emissions of a user. The device may include a processor. The device may obtain media content. The device may estimate a first energy consumption value based on the media content. The device may receive a user input indicating a request to adjust the first energy consumption value or adjust a quality level associated with the media content. The device may, based on the user input: apply a video processing algorithm to the media content to obtain a modified media content, estimate a second energy consumption value based on the modified media content, and/or compare the first and the second energy consumption values to generate an estimated energy savings. The device may accumulate and/or store the estimated energy savings in an energy savings account. The energy savings account may be associated with a user, multiple users, a device, and/or the like.

The device may include one or more features. For example, the quality level may be associated with a quality of experience (QoE) value. The user input may indicate a request to adjust the quality level associated with the media content. The device may obtain a first QoE value associated with the media content, and/or a second QoE value associated with the modified media content. The device may generate, based on the first and/or second QoE values, a QoE indicator configured to indicate the quality level associated with the modified media content. The device may send an indication of the QoE indicator to a display, to cause the indication of the QoE indicator to be displayed to a user.

In examples, the accumulated and/or stored estimated energy savings may be associated with an energy savings credit. The energy savings credit may be configured to be used as a currency for a transaction with a content service provider. The energy savings credit may be stored in the energy savings account. The device may, based on the user input: send an indication of the estimated energy savings, send an indication of the modified media content, and/or send an indication of the energy savings account to a content service provider. The video processing algorithm may be configured to modify the media content to reduce at least one of a strength, quality, energy consumption value, or a greenhouse gas emission value associated with the media content. The device may send an indication of the estimated energy savings and/or an indication of the modified media content to a display, to cause the indication of the estimated energy savings and/or the indication of the modified media content to be displayed to a user. The device may receive, in video data (e.g., via metadata included in a bitstream), an indication of the media content and/or the first energy consumption value. The first energy consumption value may be estimated based on the indication.

A method may include obtaining media content. The method may include estimating a first energy consumption value based on the media content. The method may include receiving a user input indicating a request to adjust the first energy consumption value and/or adjust a quality level associated with the media content. The method may include, based on the user input: applying a video processing algorithm to the media content to obtain a modified media content, estimating a second energy consumption value based on the modified media content, and/or comparing the first and/or the second energy consumption values to generate an estimated energy savings. The method may include accumulating and/or storing the estimated energy savings in an energy savings account.

The method may include one or more features. For example the quality level is associated with a QoE value. The user input may indicate a request to adjust the quality level associated with the media content. The method may include obtaining a first QoE value associated with the media content, and/or a second QoE value associated with the modified media content. The method may include generating, based on the first and/or second QoE values, a QoE indicator configured to indicate the quality level associated with the modified media content. The method may include sending an indication of the QoE indicator to a display, to cause the indication of the QoE indicator to be displayed to a user.

The accumulated and/or stored estimated energy savings may be associated with an energy savings credit. The energy savings credit may be configured to be used as a currency for a transaction with a content service provider. The energy savings credit may be stored in the energy savings account. The method may include, based on the user input: sending the indication of the estimated energy savings, sending the indication of the modified media content, and/or sending an indication of the energy savings account to a content service provider.

The video processing algorithm may be configured to modify the media content to reduce at least one of a strength, quality, energy consumption value, or greenhouse gas emission value associated with the media content. The method may include sending an indication of the estimated energy savings and/or an indication of the modified media content to a display, to cause the indication of the estimated energy savings and/or the indication of the modified media content to be displayed to a user.

The method may include sending an indication of the estimated greenhouse gas savings and/or an indication of the modified media content to a display, to cause the indication of the estimated greenhouse gas savings and/or the indication of the modified media content to be displayed to the user.

The method may include receiving, in video data, an indication of the media content and/or the first energy consumption value. The first energy consumption value may be estimated based on the indication.

In examples, a computer program product which is stored on a non-transitory computer readable medium may comprise program code instructions for implementing steps of a method as described herein when executed by a processor.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 is a flow diagram illustrating an example for determining and/or storing saved watts.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

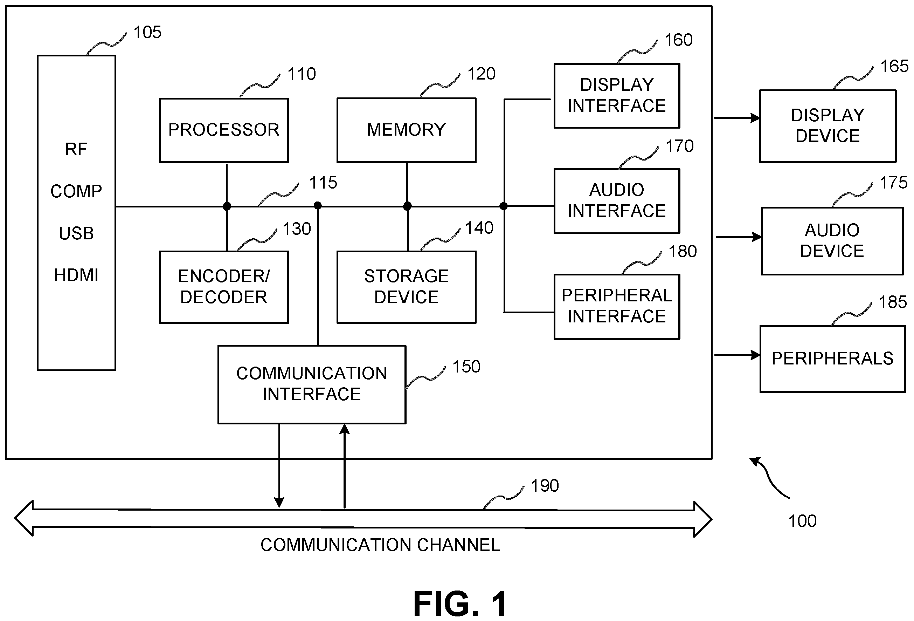

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, 3D, VR, or AR glasses, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

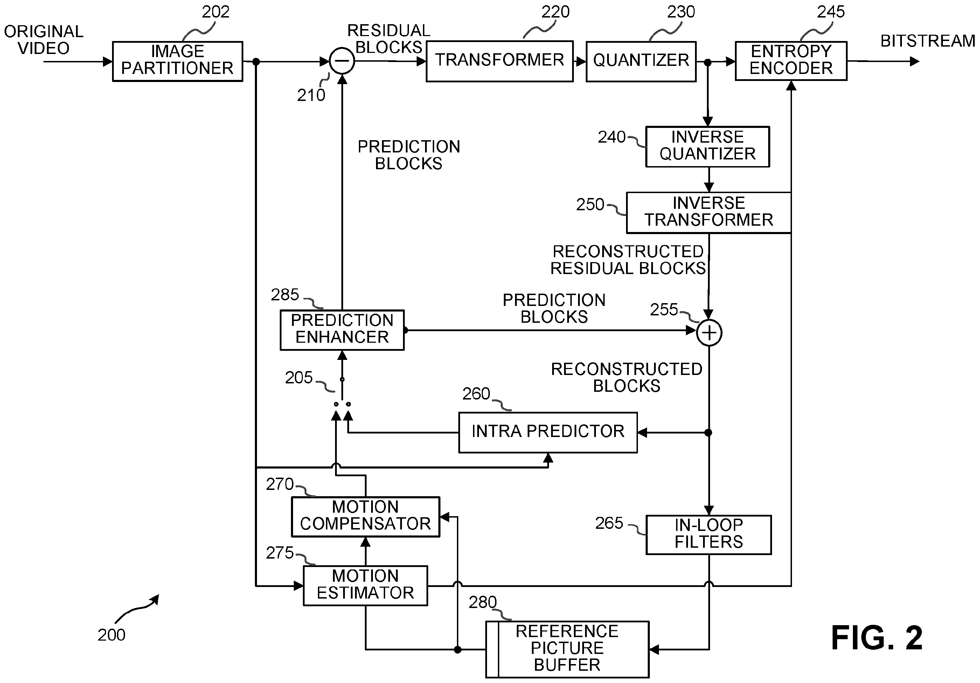

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

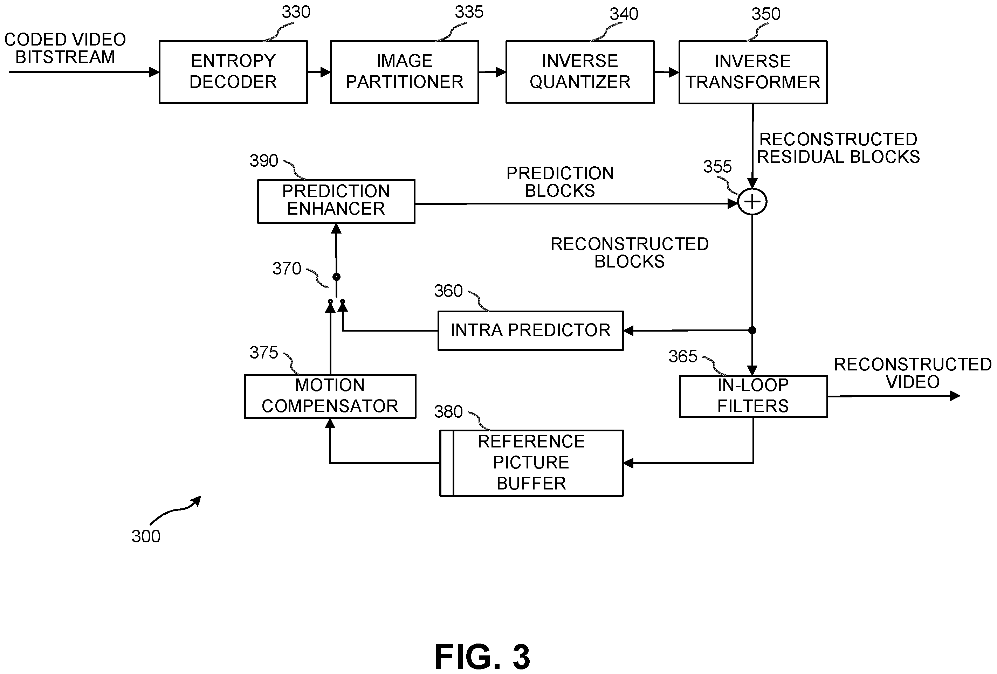

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C, Cb, Cr*).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Feature(s) associated with energy specifications (e.g., requirements) of consumer electronics (CE) and/or mobile devices that process (e.g., manipulate) images and/or videos (e.g., while displaying images and videos on a screen) are provided herein.

Electronic device manufacturers may work to reduce the energy consumption of electronic devices. Reduced energy consumption may reduce (e.g., limit) the environmental impact of such electronic devices. Reduced energy consumption may contribute to the emergence of a sustainable display industry.

For example, the increase in display resolution (e.g., from SD to HD to 4K and beyond) and the introduction of high dynamic range imaging may correspond to an increase in energy specifications (e.g., requirements) of display devices (e.g., which is not consistent with the global need to reduce energy consumption).

Displays may be a source (e.g., an important source) of energy consumption (e.g., displays on battery-powered devices, for example, smartphones, or displays in the global TV/video distribution chain). Other components of the video chain may contribute to the total energy balance in relation to video content. Energy reduction may be implemented in components and/or video chain segments other than displays.

Feature(s) described herein relate to the reduction of the energy specifications (e.g., requirements) of CE and mobile display devices. Feature(s) described herein may preserve or control the quality of experience (e.g., contrast, luminance, temporal smoothness, or color levels for instance) while reducing energy consumption.

Image/video processing algorithms dedicated to energy reduction tasks may realize their tasks with different degrees of Quality of Experience (QoE). For example, algorithms may introduce no defects or no visible defects. Algorithms may create visible defects of different strength or disturbance for the end user.

If no defects or visible defect are introduced (e.g., sometimes referred to as the flawless case), energy reduction may not be balanced with QoE (e.g., because the latter is not modified). This may be the case in video broadcast (e.g., where the image displayed on the user's screen shows as few degradations as possible for a given transmission and display environment). Users may wish to contribute to energy consumption reduction. For example, users may accept some QoE reduction in order to contribute to energy consumption reduction.

A high-quality specification (e.g., an absolutely high-quality requirement) may be used for feature movies or programs with a high artistic value. The QoE level (e.g., QoE value) may be evaluated for other program types (e.g., weather forecast, TV games, cartoons, sitcoms, advertisements, etc.) that do not need high (e.g., an absolutely crisp) quality. Reducing quality on selected program types may be possible (e.g., even on broadcast programs), for example, specifically if energy consumption is reduced (e.g., if there is a gain in energy).

If defects are introduced, the system and/or device may balance the energy reduction against QoE (e.g., to make QoE reduction acceptable). Defects (e.g., even if strong) may be acceptable to the end users (e.g., particularly if the defects are associated with explicit and direct benefits, such as energy consumption reduction).

Indicators (e.g., health, money savings, social media indicators) may put the reward on the moral or ethical satisfaction of users or future general benefit aspects. Feature(s) described herein relate to tangible benefits/rewards (e.g., in the form of video upgrades or access to premium content). The benefits/rewards may be supported by an account representative of energy-related efforts of the users.

A currency (e.g., sometimes referred to as "Saved Watts") may be defined and credited. For example, users may create an account (e.g., managed by a broadcaster/operator, a subcontractor, or a third party). The currency may be a restricted currency (e.g., limited to precise usages, as described herein, or as defined by the currency administrators). Energy savings may be stored on the account depending on a user (or broadcaster/operator) action. If a sufficient amount of Saved Watts is available on the account, the user may purchase/receive a reward (e.g., such as the examples given herein). In examples, the user may include one or more users (e.g., a user, a family household, an entity such as a place of business, and/or the like).

A currency may be defined as a system of money in common use within a specific environment over time. Currency may also be defined as a medium of exchange. In examples, Saved Watts may be defined as a currency for the media environment (e.g., with its source being energy efficiency improvement in the media environment). Saved Watts may be earned by energy saving efforts or greenhouse gas emission savings effort. Saved Watts may be used to obtain (e.g., purchase) goods in a media ecosystem. The broadcaster, operator, a subcontractor (e.g., or a third-party working for the broadcaster, operator, or subcontractor) may administer these exchanges. For example, the broadcaster, operator, a subcontractor (e.g., or a third-party working for the broadcaster, operator, or subcontractor) may have the capacity to exchange video clips for Saved Watts as a transaction.

Converting Saved Watts to an actual currency (e.g., Dollars or Euros) may be a choice of the broadcaster/operator. In an example, the broadcaster/operator may give rebates on a subscription fee associated with the account, or a monetary reward.

Some regions (e.g., Europe) may request (e.g., increasingly require) that companies report on their greenhouse gas emissions. For example, reporting standards (e.g., reporting requirements) for corporate sustainability may be implemented. Companies (e.g., companies in Europe, including those based elsewhere with European operations) may report (e.g., be required to report) indirect emissions across their value chain. In examples, opportunities to reduce emissions may be implemented (e.g., via Obligations of the Carbon Inventory).

For example, three Scopes may be defined. A first example scope (e.g., Scope 1) may relate to direct emissions (e.g., notably caused by company facilities and company vehicles). A second example scope (e.g., Scope 2) may relate to indirect emissions due to the purchase of electricity, steam heating and cooling, etc. A third example scope (e.g., Scope 3) may relate to indirect emissions in the upstream and downstream in the company's value chain.

Scope 3 reporting may be broken down (e.g., further broken down) into a number of different classes. For example, the Scope 3 upstream activities may include: purchased goods and services; capital goods; fuel- and energy-related activities not included in scope 1 or scope 2; upstream transportation and distribution; waste generated in operations; business travel; employee commuting; upstream leased assets; and/or the like.

The Scope 3 downstream activities may include: downstream transportation and distribution; processing of sold products; use of sold products; end-of-life treatment of sold products; downstream leased assets; franchises; investments; and/or the like

The Scope 3 categories relevant for broadcasters and media streaming companies may include purchased goods and services (e.g., sometimes referred to as Category 1 or Cat 1) and use of products sold (e.g., sometimes referred to as Category 11 or Cat 11).

In an example, a broadcaster may send out (e.g., transmit) a program through digital terrestrial television (DTV). An end user device (e.g., a television) receiving the program may use energy to display the program. In this case, a television that uses energy to display the program will cause emissions that may be considered 'Scope 3, Cat 11 indirect use phase' for the broadcaster.

If a user decides to reduce this energy using video processing (e.g., as described herein) made available by the broadcaster, the broadcaster may have a gain in its Scope 3 obligations. In this case, the broadcaster may (e.g., in return) reward the user for their effort or annoyance (e.g., due to reduced image quality). For example, the broadcaster may offer an incentive.

The global carbon footprint may be reduced (e.g., need to be reduced due to climate change). Carbon footprint reduction may be performed in the Consumer Electronics domain (e.g., by reducing the energy consumption of devices, or changing the type of energy use for greener energy sources).

Due to climate change, there may be an urgent need to reduce our carbon footprint. Our carbon footprint may be reduced in the CE domain, by reducing the energy consumption of devices.

Video processing algorithms may be developed with the objective to minimize the energy consumed by displays and/or to preserve (e.g., as much as possible) the QoE value for the user. End users may be considered to reduce energy consumption by allowing (e.g., letting) a user to balance between an acceptable level of quality and the amount of energy saved.

Examples described herein may motivate the users to save energy while using a device (e.g., such as watching their programs on TV), and/or (e.g., possibly) to motivate users to accept a poorer quality on programs, to save more energy. To counterbalance the poorer quality, the users may be compensated. Examples described herein may provide practical benefits and/or compensate users for their energy saving efforts.

Examples described herein may create an exchange means, (e.g., a conversion path, a currency, and/or the like), between the value created for the user and/or the broadcaster/operator (e.g., value generated by lowering energy consumption), and/or the value of a incentivizing (e.g., motivating a reward) for users.

The action of the users may create value using an energy saving tool. The action of the users may create value based on their readiness and/or willingness to accept a degree of QoE degradation (e.g., a level of QoE degradation). An incentive (e.g., the reward) may create the motivation for the action and for having an appropriate mindset (e.g., to receive QoE degradation based on an incentive).

An algorithm strength (e.g., corresponding to a fine and continuous manner of controlling the strength of any algorithm) may be illustrative of the quality of the output content. The algorithm strength may be linked (e.g., directly linked) with the amount of energy consumption (or reduction) of the algorithm. A link with the amount of energy saved may not be (e.g., may not necessarily be) explicit and clear to the end users. Accordingly, the link with the amount of energy saved may not encourage (e.g., be the best way to encourage) users to lower the quality of the output content (e.g., and consequently their energy consumption.

Information regarding carbon emission caused by consumption of content may be generated. For example, a carbon intensity associated with a device displaying a video segment of content received from a content provider may be determined. Information indicative of energy spent by the device to display the video segment may be recorded. An emission report may be generated based on the determined carbon intensity and the recorded information. The emission report may be transmitted (e.g., to the provider).

Information comprising understandable feedback related to quality choice may be displayed to users (e.g., in the form of indicators). For example, the user may have access to (e.g., an explicit view of) the value of some understandable indicators of benefits (e.g., direct benefits for their health, direct economic benefits, direct reduction in terms of pollution levels, direct indication on the protection of the biodiversity, direct indication on the preservation of the amount of raw materials, and/or benefit in terms of social recognition) that would result from an action/decision of the users to reduce the quality of the content consumed.

The link between quality reduction and the other comprehensible indicators may be accessible (e.g., in a fine and continuous manner). This may allow users to precisely control the level of quality in relation to the level of benefit (e.g., shown by the indicators).

Energy Credit may be referred to as a service concept. Energy Credit may be used as a credit limit used by the operator network's credit control.

Energy credit may refer to a service concept used as an abstract measure of the energy impact on the network of delivering a service to a device (e.g., a wireless transmit/receive unit (WTRU), such as user equipment (UE)). The 5G system may (e.g., subject to the operator's policies) support a mechanism to perform energy consumption credit limit control for services without quality of service (QoS) condition(s). Energy credits (e.g., associated to a subscriber and used by the operator network's credit control) may be consumed depending on the device behavior (e.g., based on the data volume time, location, and/or the amount of energy consumed by the network to provide the service).

Energy Credit may be used to count the amount of energy already consumed by a user while using a service or a pool of services.

Examples described herein may store, in an account (e.g., a local or remote file, record, or database), values representative of energy savings (e.g., credits or saved watts) gained (e.g., obtained) by a user applying a video processing algorithm to reduce energy consumption of a device (e.g., a TV set). The stored energy savings may be considered and/or used as a currency for the users to purchase (e.g., obtain) digital goods or rewards. **In** examples, values including (e.g., representative of) greenhouse gas emissions savings may be stored.

An optimized video processing algorithm may decrease the users energy consumption (e.g., their carbon footprint). Energy saving information may be estimated or measured based on a video processing algorithm. The corresponding gain (e.g., energy savings) may be stored on an account (e.g., a local or remote file, a record, a database, and/or the like) that may be linked to the user (e.g., to a user, a group of users, a family household, a TV set, a smartphone, and/or the like). The gain (e.g., energy savings credit) stored in an account may be a saved watts account for use by the user (e.g., for future use).

Examples described herein may create an account, an account's administration by the broadcaster/operator, an account's filling with saved watts (e.g., corresponding to the use of energy-aware processing on the content), and/or an account's use in an incentive example (e.g., basic rewarding scenario). Energy-aware processing may reduce the energy consumption of content when used (e.g., when displayed on a screen).

A benefit may be provided (e.g., proposed to the user that is directly intelligible) to the user to motivate them to use tools for energy reduction. The user may be encouraged to continue acting, even if the benefit represents a reduction in terms of level of quality of the video after applying energy saving algorithms.

For a service provider (e.g., a broadcaster or an operator), there may be a (e.g., direct) benefit of energy reduction by users, contributing to their reporting (e.g., as described herein with reference to the Scope 3 reporting).

In examples, saved watts may be acquired (e.g., obtained) through the use of energy aware processing applied on media content. One or more mechanisms to propose an incentive (e.g., rewards paid) with the saved watts account are described herein.

Examples described herein may provide and/or credit a currency (e.g., saved watts). In examples, users may create an account (e.g., the account being managed by a service provider). A currency (e.g., a restricted currency) may be used as described herein (e.g., the currency may be limited to precise usages or as provided by the currency administrators). Energy savings may be stored on an account based on (e.g., depending on) a user's action, or a service provider's action. If/when a sufficient amount of a currency (e.g., saved watts) is available on the account, the user may purchase and/or obtain an incentive (e.g., a reward) as described herein.

The currency to access an incentive (e.g., different rewards) may be saved watts, or accounted saved energy, as resulting from the users' efforts in watching programs with a lower QoE value and/or processed to consume less energy (e.g., media content processed by the device to consume less energy). A currency may be a system of money in common use within an environment over time. A currency may be a medium of exchange. In examples, a currency (e.g., saved watts) may be a currency for the media environment, with its source in the media environment energy efficiency improvement. The currency may be earned by energy saving efforts. The currency may provide the capacity to obtain (e.g., valuable) goods in a media ecosystem. The service provider may be administering an exchange. The exchange may include, for example, the capacity to exchange video clips for a currency (e.g., saved watts) as a transaction (e.g., exchange media content for energy savings).

Converting an energy savings currency (e.g., saved watts) to an actual currency (e.g., dollars or euros) may be a choice of the service provider. The service provider may provide an incentive such as a rebate on a subscription fee, or a monetary type reward.

Referring to carbon inventory requests (e.g., as described with reference to the third scope for service providers), the examples described herein may include energy savings by end users, and/or may allow an optimized (e.g., easier) accounting of a currency (e.g., saved watts) for the service provider.

Examples described herein may be described with reference to the processing and viewing of videos, however the examples described herein may be applicable to media content (e.g., any media content such as audio, text, 3D content, haptic content and/or the like).

An objective may be (e.g., primarily) to minimize the energy consumption of a visual media presentation or display (e.g., on TV sets or on mobile displays, AR or VR sets, and/or the like). Features may be described with reference to a TV, although this is not meant to be limiting as one or more features may be related to and/or applicable for other media, content forms, devices, and/or the like (e.g., such as a TV, a WTRU, mobile display, augmented reality (AR), virtual reality (VR) sets, and/or any other media presentation and/or display device).

Energy consumption reduction may be performed while maintaining and/or optimizing (e.g., mastering) the QoE of the (e.g., visual) media presentation (e.g., affecting colors or resolution at variable levels).

In examples, the user may select (e.g., choose) a personal balance between a quality level of displayed content (e.g., a QoE value) after applying an energy saving video processing algorithm to achieve the corresponding energy reduction (e.g., by modifying the quality level).

A value of energy reduction may not be (e.g., easily) understandable or motivating (e.g., enough) for the user to change their habits and/or accept a reduction of quality.

Examples described herein may store an energy savings currency (e.g., saved watts for later use).

In examples, a user may obtain media/video incentives (e.g., rewards) purchased with an energy saving credit (e.g., an energy savings currency).

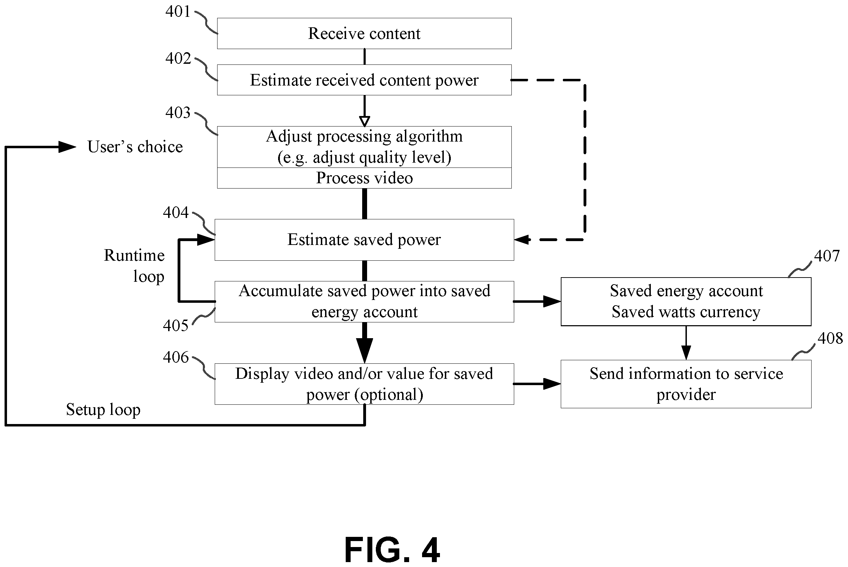

FIG. 4 is a flow diagram illustrating an example for determining and/or storing saved watts (e.g., an energy savings currency for later use). One or more operations may be described with reference to FIG. 4. One or more operations associated with FIG. 4 may be performed by a WTRU, a server, and/or the like.

At block 401, media content (e.g., a video frame) with a (e.g., given) quality value may be received. In examples, block 401 may be performed by a TV reception module, a WTRU, or the like. The WTRU may obtain media content (e.g., video, audio, text, haptic, and/or the like) from, for example, a service provider. In examples, a WTRU may receive, in video data (e.g., via metadata in a bitstream), an indication of the media content and/or of a first energy consumption value (e.g., wherein the first energy consumption value may be estimated based on the indication). The indication may include information associated with the quality of the media content.

At block 402, the media content's energy and/or power consumption (e.g., the power consumption of the content of block 401) may be estimated. The estimate may be a reference. In examples, block 402 may be performed by a WTRU (e.g., a software module (e.g., a processor) including a model of the TV set, and/or by measurements as part of a TV set hardware, for an image and/or the like). In examples, a WTRU may estimate a first energy consumption value based on the media content and/or on the received indication of the media content.

A first loop (e.g., a setup loop) may be provided. In examples, the first loop may be associated with one or more operations described with reference to block 403, 404, 405, and/or 406.

At block 403, the user may adjust the quality level of the content (e.g., the content of block 401) to save energy, which may adjust the processing algorithm to modify the media content (e.g., which may be responsible for modifying the content). In examples, block 403 may be performed by a device (e.g., a user interface software running on the TV set). In examples, a portion (e.g., a part) of the first loop (e.g., the setup loop) and/or a second loop (e.g., a runtime loop) may start. In examples, a device may apply a video processing algorithm to the media content to obtain a modified media content. In examples, the video processing algorithm may be configured to modify the media content to reduce at least one of a strength, quality, or energy consumption value associated with the media content. In examples, a device may receive a user input indicating a request to adjust the estimated energy savings or a QoE indicator associated with the media content. The video processing algorithm may be applied to the media content to obtain the modified media content in response to the user input.

A second loop (e.g., a runtime loop) may be provided. In examples, the second loop may be associated with one or more operations described with reference to block 404 and/or 405.

At block 404, saved power may be estimated. In examples, block 404 may be performed by a device (e.g., a software model of the TV set, and/or by measurements as part of a TV set hardware, for an image and/or the like). In examples, a device may estimate a first energy consumption value based on the media content and/or a second energy consumption value based on the modified media content (e.g., as modified by the processing algorithm). In examples, a device may obtain a first value associated with a QoE metric (e.g., a QoE value) for the media content, and a second value associated with the QoE metric for the modified media content. The device may generate (e.g., estimate), based on the first and second values associated with the QoE metric, a QoE indicator configured to indicate a quality level associated with the modified media content.

At block 405, saved power may be accumulated (e.g., added) in an account (e.g., a saved energy account (e.g., of block 407). In examples, the account and/or the saved power accumulated in block 407 may be stored in a device (e.g., a user device and/or or by the service provider, for example, at the client side, or at the server side). In examples, block 405 may be performed by a device (e.g., via software running on a TV set, such as, using a memory module part of the TV set, and/or a remote web service, and/or the remote web service's associated memory module). In examples, block 405 may be supported by SEI messages (e.g., a service provider informing a user about the saved energy account status). In examples, the accumulated estimated energy savings may be associated with an energy savings credit. The energy savings credit may be configured to be used as a currency for a transaction with a content service provider. The energy savings credit may be stored in the energy savings account.

At block 408, the account of block 407 (e.g., a saved energy account of block 407) may be returned as information to the service provider. In examples, the WTRU may send the indication of the estimated energy savings, the indication of the modified media content, and/or an indication of the energy savings account to a content service provider.

The second loop (e.g., the runtime loop of blocks 404, 405) may end.

At block 406, the content (e.g., with an adjusted quality) may be displayed with a saved power value and/or an indicator (e.g., at least temporarily with a saved power value and/or indicator). In examples the indicator may indicate an energy savings and/or a level of a QoE metric. In examples, an indication of the estimated greenhouse gas savings and/or an indication of the modified media content may be sent to a display, to cause the indication of the estimated greenhouse gas savings and/or the indication of the modified media content to be displayed to the user.

In examples, operations associated with block 406 may be performed by a WTRU (e.g., TV set widget, and/or the like). The users may evaluate the values of the indicators in relation to the quality level obtained on the content. If the user is satisfied, an adjustment of the algorithm strength and/or quality may end (e.g., the first loop may end), and/or the video content may be displayed. In examples, block 406 may be performed by a WTRU (e.g., software module of the TV set as described with reference to block 402). In examples, a WTRU may send an indication of the estimated energy savings and/or an indication of the modified media content to a display (e.g., to cause the indication of the estimated energy savings and/or the indication of the modified media content to be displayed to the user).

At block 408, the service provider may be informed of the saved watts credit transaction. In examples, operations associated with block 408 may be performed by a WTRU (e.g., a user device and/or a service provider, such as one or more components via software and/or communication means as described herein).

If the user is not satisfied (e.g., with the content quality and/or indicator), one or more operations associated with block 403 may be performed to modify the algorithm strength and/or quality.

If the user is satisfied (e.g., with the content quality and/or indicators), the first loop (e.g., the setup loop) may be stopped. In examples, the second loop (e.g., the runtime loop) may continue to (e.g., permanently) estimate the saved power and/or accumulate the saved power in the saved power account. As described herein, the WTRU may receive a user input indicating a request to adjust the estimated energy savings or a QoE indicator associated with the media content. The video processing algorithm may be applied to the media content to obtain the modified media content in response to the user input.

In examples, saved watts may be accounted for in a streaming example (e.g., if/when the user requests a preprocessed content version meant to reduce energy consumption). In examples, the number of saved watts may be transmitted as metadata with the reduced energy content (e.g., to be correctly accounted). The number of saved watts may be estimated by measuring the (e.g., actual) power savings of the streamed content (e.g., while watching the streamed content as described herein). In examples, if/when the energy saved amount and/or the saved watts amount is sent as metadata, the saved energy for the video chain (e.g., for the storage, encoding, transmission, decoding, and/or display of the energy-aware content and not just the display portion) may be accounted for, crediting the user for saved watts (e.g., more saved watts than for only the display portion).

In examples, negative saved watts may be included (e.g., added) as part of the user account, if/when the user increases (e.g., by a user action) the energy consumption associated with the display (e.g., of the screen).

In examples, the user and/or service provider may count the quantity (e.g., number) of watts saved if/when using video processing algorithms to reduce energy consumption of a device (e.g., a display). The user may be incentivized (e.g., rewarded) if/when the user spends their savings. The service provider may be incentivized to manage an energy savings by claiming the energy savings in requests (e.g., based on the third scope as described herein).

The availability of an account of saved watts for a device (e.g., display or any other device) may influence the choices of a user to lower/increase the quality of the consumed content with a clearer view of the consequences of their choices and/or the motivation of being incentivized (e.g., rewarded). The user may be more inclined to act towards reducing their level of acceptable quality, consequently lowering their energy consumption and/or their greenhouse gas emissions.

When displaying an image or video via a WTRU (e.g., a display), one or more image or video processing algorithms may provide a gain in energy consumption with an optimized level of quality reduction that a user would accept.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. An energy saving device comprising:
a processor configured to:
obtain media content;
estimate a first energy consumption value based on the media content;
receive a user input indicating a request to adjust the first energy consumption value or adjust a quality level associated with the media content;
based on the user input:
apply a video processing algorithm to the media content to obtain a modified media content,
estimate a second energy consumption value based on the modified media content, and
compare the first and the second energy consumption values to generate an estimated energy savings; and
accumulate and store the estimated energy savings in an energy savings account.

2. The device of claim 1, wherein the quality level is associated with a quality of experience (QoE) value, wherein the user input indicates a request to adjust the quality level associated with the media content, and wherein the processor is further configured to:
obtain a first QoE value associated with the media content, and a second QoE value associated with the modified media content;
generate, based on the first and second QoE values, a QoE indicator configured to indicate the quality level associated with the modified media content; and
send an indication of the QoE indicator to a display, to cause the indication of the QoE indicator to be displayed to a user.

3. The device of any one of claims 1 or 2, wherein the accumulated and stored estimated energy savings is associated with an energy savings credit, wherein the energy savings credit is configured to be used as a currency for a transaction with a content service provider, and wherein the energy savings credit is stored in the energy savings account.

4. The device of any one of claims 1-3, wherein the processor is further configured to:
based on the user input:
send an indication of the estimated energy savings, or
send an indication of the modified media content.

5. The device of any one of claims 1-4, wherein the video processing algorithm is configured to modify the media content to reduce at least one of a strength, quality, or energy consumption value associated with the media content.

6. The device of any one of claims 1-5, wherein the processor is further configured to:
send an indication of the estimated energy savings and an indication of the modified media content to a display, to cause the indication of the estimated energy savings and the indication of the modified media content to be displayed to a user.

7. The device of any one of claims 1-6, wherein the processor is further configured to send an indication of the energy savings account to a content service provider.

8. A method, comprising:
obtaining media content;
estimating a first energy consumption value based on the media content;
receiving a user input indicating a request to adjust the first energy consumption value or adjust a quality level associated with the media content;
based on the user input:
applying a video processing algorithm to the media content to obtain a modified media content,
estimating a second energy consumption value based on the modified media content, and
comparing the first and the second energy consumption values to generate an estimated energy savings; and
accumulating and storing the estimated energy savings in an energy savings account.

9. The method of claim 8, wherein the quality level is associated with a quality of experience (QoE) value, wherein the user input indicates a request to adjust the quality level associated with the media content, and wherein the method further comprises:
obtaining a first QoE value associated with the media content, and a second QoE value associated with the modified media content;
generating, based on the first and second QoE value, a QoE indicator configured to indicate the quality level associated with the modified media content; and
sending an indication of the QoE indicator to a display, to cause the indication of the QoE indicator to be displayed to a user.

10. The method of any one of claims 8 or 9, wherein the accumulated and stored estimated energy savings is associated with an energy savings credit, wherein the energy savings credit is configured to be used as a currency for a transaction with a content service provider, and wherein the energy savings credit is stored in the energy savings account.

11. The method of any one of claims 8-10, wherein the method further comprises:
based on the user input:
sending the indication of the estimated energy savings, or
sending the indication of the modified media content.

12. The method of any one of claims 8-11, wherein the video processing algorithm is configured to modify the media content to reduce at least one of a strength, quality, or energy consumption value associated with the media content.

13. The method of any one of claims 8-12, wherein the method further comprises:
sending an indication of the estimated energy savings and an indication of the modified media content to a display, to cause the indication of the estimated energy savings and the indication of the modified media content to be displayed to a user.

14. The method of any one of claims 8-13, wherein the method further comprises sending an indication of the energy savings account to a content service provider.

15. A computer program product which is stored on a non-transitory computer readable medium and comprises program code instructions for implementing steps of a method according to at least one of claims 8-14 when executed by a processor.
